# EUROPEAN PATENT APPLICATION

(11) **EP 4 664 573 A1**
(43) Date of publication of application: **17.12.2025**
(21) Application number: 24826274.3
(22) Date of filing: 20.06.2024
(51) Int. Cl.: H01M 10/04, B65H 35/00, H01M 50/595

(54) **PROTECTION TAPE ATTACHING DEVICE AND BATTERY CELL MANUFACTURING METHOD USING SAME**

(30) Priority: 23.06.2023 KR 20230081113
(71) Applicant: LG Energy Solution, Ltd., Seoul 07335 (KR)
(72) Inventor: PARK, Hyeon Uk, Daejeon 34122 (KR)
(74) Representative: Goddar, Heinz J.
(86) International application number: PCT/KR2024/008541
(87) International publication number: WO 2024/262959

(57) **Abstract**

The present invention relates to a protective tape attachment device for electrode tab protection of a secondary battery and a battery cell manufacturing method using the same, and more specifically, relates to a protective tape attachment device capable of attaching both ends of a protective tape, and a battery cell manufacturing method using the same.

According to one example of the present invention, it may provide a protective tape attachment device capable of bonding both ends of each of an upper protective tape and a lower protective tape to each other up and down, comprising an upper main attachment device and a lower main attachment device attaching the upper protective tape and the lower protective tape to an electrode tab respectively, and an upper end attachment device and a lower end attachment device moving independently of the upper main attachment device and the lower main attachment device on both sides of the upper main attachment device and the lower main attachment device respectively.

## Description

### Technical Field

The present invention relates to a protective tape attachment device for electrode tab protection of a secondary battery and a battery cell manufacturing method using the same, and more specifically, relates to a protective tape attachment device capable of attaching both ends of a protective tape and a battery cell manufacturing method using the same.

This application claims the benefit of priority based on Korean Patent Application No. 10-2023-0081113 dated June 23, 2023, the disclosure of which is incorporated herein by reference in its entirety.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 V to 37 V) unit cell among existing secondary batteries, and excellent energy densities, so that they can have characteristics optimized for mobile devices.

As the lithium secondary battery, a pouch-type battery cell is widely used, in which an electrode assembly is sealed by a pouch, which is an aluminum sealing material.

In general, the electrode assembly, which is the internal component of the battery cell, is manufactured by assembling unit bodies laminated in a four-layer structure of positive electrode/separator/negative electrode/separator, or a five-layer structure of positive electrode/separator/negative electrode/separator/positive electrode or negative electrode/separator/positive electrode/separator/negative electrode and integrating them. Then, such an electrode assembly is accommodated in a pouch case that is an encapsulating material. The pouch type accommodates the electrode assembly in a pouch made of a soft polymer material with an irregular shape.

The pouch, which is a case of a pouch-type battery cell, is manufactured by forming a cup-shaped accommodating part accommodating an electrode assembly on a pouch film made of a flexible material. That is, when the accommodating part provided with an accommodating space accommodating the electrode assembly is formed in the pouch film, the electrode assembly is stored in the accommodating space of the accommodating part, and the edge portion is sealed, thereby manufacturing a secondary battery. Such a pouch film is made up of multiple layers, such as an external coating layer, a metal barrier layer, and an internal adhesive layer.

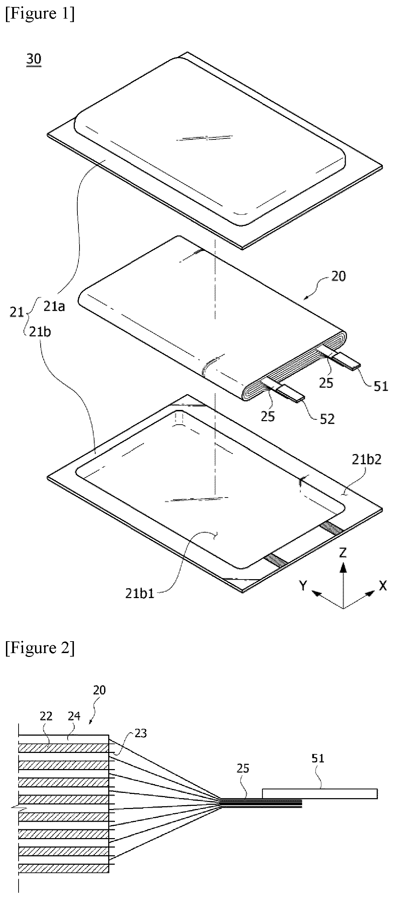

Figure 1 is an exploded perspective diagram showing components of a pouch-type secondary battery of a conventional art. Figure 2 is a side view showing internal components of a pouch-type secondary battery of a conventional art.

Referring to Figures 1 and 2, a pouch-type battery cell (20) comprises an electrode assembly (50) including a positive electrode (24) and a negative electrode (22), on which an electrode active material is applied to an electrode plate, and a separator (23) interposed between the positive electrode (24) and the negative electrode (22).

In a plurality of positive electrodes (24), electrode tabs are brought together through a tab guide process, and after pre-welding, the electrode tabs can be welded to a positive electrode lead (51).

Similarly, in a plurality of negative electrodes (22), electrode taps are brought together through a tab guide process, and after pre-welding, the electrode tabs can be welded to a negative electrode lead (52).

The positive electrode lead (51) and the negative electrode lead (52) perform a role of forming an electrical connection with an external terminal (not shown) by being pulled out when the electrode assembly (50) has been accommodated in the pouch case (21).

When the manufacture of the electrode assembly (50) is completed, the electrode assembly (50) is accommodated in an accommodation portion (21b1) formed in the lower pouch film (21b). In this instance, the plurality of positive electrode leads (51) and negative electrode leads (52) of the electrode assembly (50) protrudes out of the accommodation portion (21b1). When the insertion of the electrode assembly (50) into the pouch is completed, a pouch casing process can be performed, and then an electrolyte can be injected into the pouch case. Thereafter, after initial charge and discharge (activation process) is performed, a sealing process of sealing the edge portions (21b2) of the upper pouch film (21a) and the lower pouch film (21b) by heat-fusion can be performed. After the sealing process, the manufacture of the battery cell (50) can finally be completed by performing an aging process and an inspection process, and the like.

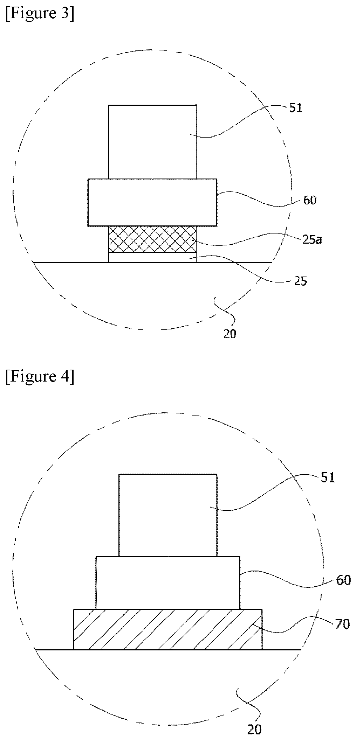

Figure 3 is a partial plan view showing a part of a pouch-type electrode assembly of a conventional art. Then, Figure 4 is a partial plan view showing a part of a pouch-type electrode assembly of a conventional art.

The positive electrode lead (51) and the negative electrode lead (52) are provided with a lead film (60). That is, the positive electrode lead (51) and the negative electrode lead (52) penetrate the pouch, where the upper and lower surfaces of the positive electrode lead and the negative electrode lead are in contact with the pouch, and a lead film (60) is provided in such a contacting portion for electrical insulation. The lead film (60) can melt upon pouch sealing to increase a sealing strength between the positive electrode lead (51) and the negative electrode lead (52) and the pouch.

The positive electrode lead (51) and the negative electrode lead (52) can be put into a welding process in a state where the lead film (60) is firmly attached to the positive electrode lead and the negative electrode lead. Therefore, in the manufacturing process of the electrode assembly (50) and the battery cell (20), the process for attaching the lead film (60) to the positive electrode lead and the negative electrode lead may not be performed.

Based on the positive electrode, the electrode tab (25) and the positive electrode lead (51) are firmly connected to each other by resistance welding, ultrasonic welding, or laser welding, where a welded portion (25a) with a rough surface is generated. As such a welded portion (25a) is in contact with the pouch in a subsequent manufacturing process, it is possible to cause insulation failure of the pouch. Therefore, as shown in Figure 4, a protective tape (70) is attached to the welded portion (25a) for protection of the welded portion (25a) formed between the positive electrode lead (51) and the electrode tab (25).

Meanwhile, the electrode tab provided on the uppermost layer or the lowermost layer may be disconnected upon the guide process of the electrode tab, the pre-welding process, or the electrode tab welding process (main welding process), or upon a subsequent process. Therefore, the protective tape (70) may also be a tape for preventing disconnection of the electrode tab.

The protective tape (70) may be attached to only one side of an upper surface or a lower surface of the electrode tab, or may be attached to both sides.

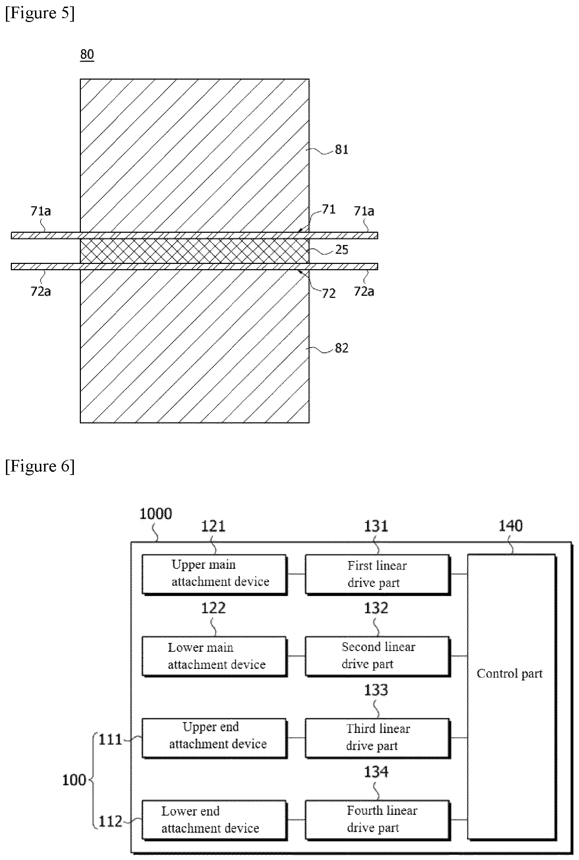

Figure 5 is a front view schematically showing a tape attaching appearance using a tape attachment device of a conventional art for attaching a protective tape.

The tape attachment device (80) of the conventional art may comprise an upper attachment device (81) and a lower attachment device (82), which may bond the upper protective tape (71) and the lower protective tape (72) to the upper surface and the lower surface of the welded portion (25a), respectively. Specifically, the upper attachment device (81) may pressurize the upper surface of the welded portion (25a) to attach the upper protective tape (71) thereto, and the lower attachment device (82) may pressurize the lower surface of the welded portion (25a) to attach the lower protective tape (72) thereto.

However, the tape attachment device (80) of the conventional art can only attach the upper protective tape (71) and the lower protective tape (72) to the upper surface and the lower surface of the welded portion (25a) of the electrode tab (25) and the positive electrode lead (51), respectively, but both ends (71a) of the upper protective tape (71) and both ends (72a) of the lower protective tape (72), which protrude on both sides of the welded portion (25a), do not completely contact each other, whereby there has been a problem that they are not attached to each other, or even if attached, they are easily separated from each other by external impact.

In both ends of the protective tape thus unattached, the bonded portion could be detached from the electrode tab by external pressurization or electrolyte flow, or the non-bonded portion could be folded. Particularly, when the ends of the protective tape were folded toward the sealing region of the pouch, both ends of the protective tape could be interposed between the pouch films during the sealing process of the pouch, thereby hindering heat fusion, so that an unsealed region could occur. In this way, if moisture penetrates from the outside through the unsealed region of the pouch, there is a concern that a swelling phenomenon is accelerated inside the battery cell.

Korean Laid-Open Patent Publication No. 2014-0137836 (hereinafter, referred to as "prior patent") discloses a tape attachment device in which a process of adsorbing a tape and a process of attaching a tape are performed in series by a tape adsorbing part linearly moving up and down.

The prior patent discloses a tape attachment device attaching a protective tape up and down across an uncoated portion and an electrode tab of an electrode plate.

The prior patent attaches the tape to the electrode tab by the raising and lowering of the tape adsorbing part directly attaching the cut tape to the electrode plate, but does not disclose a separate adhesive structure or adhesive mechanism to bond both ends of the tape.

Therefore, there is a need for a way capable of effectively fixing both ends of a protective tape attached to a lead while crossing the lead horizontally.

### Disclosure

### Technical Problem

It is an object of the present invention to solve problems caused by conventional protective tape attachment devices or attachment methods.

Through one example of the present invention, it is intended to provide a protective tape attachment device comprising an upper end attachment device and a lower end attachment device, capable of attaching both ends of each of an upper protective tape and a lower protective tape to each other, and a battery cell manufacturing method using the same.

Through one example of the present invention, it is intended to provide a protective tape attachment device comprising an upper end attachment device and a lower end attachment device which are respectively easily added to an upper main attachment device and a lower main attachment device attaching an upper protective tape and a lower protective tape to an electrode tab, and thus capable of bonding both ends of each of the upper protective tape and the lower protective tape to each other, and a battery cell manufacturing method using the same.

Through one example of the present invention, it is intended to provide a protective tape attachment device which comprising an upper end attachment device and a lower end attachment device independently raising and lowering with respect to an upper main attachment device and a lower main attachment device respectively, and thus can effectively prevent the upper end attachment device and the lower end attachment device from being interference during a process of attaching an upper protective tape and a lower protective tape to the upper main attachment device and the lower main attachment device respectively, and a battery cell manufacturing method using the same.

Through one example of the present invention, it is intended to provide a protective tape attachment device capable of preventing damage to an upper protective tape and a lower protective tape during a process of pressurizing and bonding both ends of each of the upper protective tape and the lower protective tape and increasing the bonding length of the both ends, and a battery cell manufacturing method using the same.

### Technical Solution

In order to achieve the above-described objects, according to one example of the present invention, a protective tape attachment device may be provided, which comprises an upper main attachment device for attaching an upper protective tape to an upper surface of an electrode tab provided in an electrode assembly, and a lower main attachment device for attaching a lower protective tape to a lower surface of the electrode tab, and further comprises an upper end attachment device and a lower end attachment device.

The upper end attachment device may be provided on both sides of the upper main attachment device, and may be provided to pressurize both ends of the upper protective tape extending outward from the both sides of the upper main attachment device.

The lower end attachment device may be provided on both sides of the lower main attachment device, and may be provided to pressurize both ends of the lower protective tape extending outward from the both sides of the lower main attachment device.

It is preferable that the upper end attachment device and the lower end attachment device are provided to simultaneously pressurize the both ends of the upper protective tape and the both ends of the lower protective tape, respectively, in a way that the both ends of the upper protective tape and the both ends of the lower protective tape are bonded to each other.

The both ends of the upper protective tape and the both ends of the lower protective tape are interposed between the upper end attachment device and the lower end attachment device. Therefore, as the upper end attachment device and the lower end attachment device move in opposite directions, that is, in directions closer to each other, the both ends of the upper protective tape and the both ends of the lower protective tape may be overlapped with each other to be simultaneously pressurized. Through this, an adhesive force between the upper protective tape and the lower protective tape may be further strengthened.

It is preferable that the upper end attachment device is moved downward from the upper main attachment device after pressurization of the upper main attachment device, and the lower end attachment device is moved upward from the lower main attachment device after pressurization of the lower main attachment device.

It is preferable that the upper end attachment device and the lower end attachment device are provided to be raised and lowered integrally with the upper main attachment device and the lower main attachment device, respectively.

It is preferable that the upper end attachment device and the lower end attachment device are provided to be raised and lowered independently with respect to the upper main attachment device and the lower main attachment device, respectively.

It is preferable that the upper end attachment device has an adsorption surface to which the upper protective tape is adsorbed, and the lower end attachment device has an adsorption surface to which the lower protective tape is adsorbed.

The adsorption surface may adsorb a non-adhesive surface of the upper protective tape or the lower protective tape so that an adhesive surface of the upper protective tape or the lower protective tape faces the electrode tab.

After the upper protective tape is adsorbed to the adsorption surface of the upper main attachment device in a state where the upper end attachment device is positioned above the adsorption surface of the upper main attachment, attachment of the upper protective tape may be performed, and after the lower protective tape is adsorbed to the adsorption surface of the lower main attachment device in a state where the lower end attachment device is positioned below the adsorption surface of the lower main attachment device, attachment of the lower protective tape may be performed.

The upper end attachment device and the lower end attachment device may each comprise a pressurizing block provided to pressurize an end of the upper protective tape or the lower protective tape; and a moving member moving the pressurizing block in an up-and-down direction.

It is preferable that the pressurizing block has a rounded edge contacting an extension start portion of the both ends of the upper protective tape or the lower protective tape. Through this, it is possible to prevent occurrence of a sharp bend when the upper protective tape or the lower protective tape comes off the electrode tab.

The moving member may comprise a wheel guiding a movement of the pressurizing block with respect to the upper main attachment device or the lower main attachment device. The upper main attachment device or the lower main attachment device may be provided with a rail guiding the movement path of the wheel.

The upper end attachment device and the lower end attachment device may comprise a roller member having a plurality of rolls provided to be movable up and down along one side of the upper main attachment device or the lower main attachment device, to pressurize one side of the upper protective tape or the lower protective tape.

The roller member may be provided to pressurize the upper protective tape or the lower protective tape while moving from an inner side of the upper protective tape or the lower protective tape, to which the electrode tab is bonded, to an outside terminal.

The plurality of rolls may comprise a moving roll provided to be movable up and down along one side of the upper main attachment device or the lower main attachment device; and a pressurizing roll provided to pressurize the upper surface of the upper protective tape or the lower surface of the lower protective tape.

The moving roll may be provided to guide raising and lowering of the roller member, and the pressurizing roll may be provided so that the roller member pressurizes the upper protective tape or the lower protective tape while directly contacting it.

The roller member may comprise a transmission member transmitting a vertical direction movement of the moving roll to a vertical direction movement and a horizontal direction movement of the pressurizing roll.

The pressurizing roll may be provided so that it pressurizes the upper protective tape or the lower protective tape in the vertical direction at the beginning of the pressurization, and pressurizes the upper protective tape or the lower protective tape in the horizontal direction while maintaining the vertical direction pressurization as the pressurization progresses. That is, it is preferable that the pressurizing roll is provided to be able to swing through the transmission member with respect to the moving roll.

In order to achieve the above-described objects, according to one example of the present invention, a secondary battery manufacturing method may be provided, which comprises a taping step of attaching a protective tape to an electrode tab. Specifically, the secondary battery manufacturing method may comprise: a welding step of welding an electrode tab and an electrode lead to an electrode assembly; a taping step of attaching an upper protective tape and a lower protective tape to the electrode tab; a casing step of heat-fusing a pouch, in which the electrode assembly having the upper protective tape and the lower protective tape attached is accommodated, to form a pouch case; an injection step of injecting an electrolyte into the pouch case; and a sealing step of sealing the pouch case.

It is preferable that in the taping step, the upper protective tape and the lower protective tape are attached to an upper surface and a lower surface of the electrode tab, respectively, by pressurization of an upper main attachment device and a lower main attachment device, and then both ends of the upper protective tape and both ends of the lower protective tape, which extend outward from both sides of the electrode tab, are attached to each other up and down by pressurization of an upper end attachment device and a lower end attachment device independently of the pressurization of the upper main attachment device and the lower main attachment device.

It is preferable that the upper main attachment device and the upper end attachment device are provided to be symmetrical with the lower main attachment device and the lower end attachment device with respect to the electrode tab, and move in the opposite direction to the movement direction of the lower main attachment device and the lower end attachment device for attachment of the upper protective tape and the lower protective tape and attachment of the both ends. That is, the upper end attachment device and the lower end attachment device move to push each other, so that the ends of the upper protective tape and the lower protective tape interposed between the upper end attachment device and the lower end attachment device may be bonded to each other.

It is preferable that the upper end attachment device is moved downward from the upper main attachment device after pressurization of the upper main attachment device, and the lower end attachment device is moved upward than the lower main attachment device after pressurization of the lower main attachment device.

That is, it is preferable that after attaching the upper protective tape and the lower protective tape to the electrode tab, the both ends of the upper protective tape and the lower protective tape are bonded to each other up and down. Therefore, after stably attaching the upper protective tape and the lower protective tape to the electrode tab, the firm bonding may be performed from the start point of both ends of the upper protective tape and the lower protective tape to the end point.

It is preferable that the pressurization by the upper end attachment device and the lower end attachment device is performed in a state where the pressurization of the upper main attachment device and the lower main attachment device is maintained.

The upper end attachment device and the lower end attachment device may comprise a pressurizing block pressurizing the both ends of the upper protective tape or the lower protective tape by raising and lowering.

The upper end attachment device and the lower end attachment device may comprise a pressurizing roll pressurizing both ends of the upper protective tape or the lower protective tape by raising and lowering, and rolling.

The upper end attachment device and the lower end attachment device may be provided to be raised and lowered based on the adsorption surface of the upper main attachment and the lower main attachment device respectively, and the elevating gap may be preset.

In the case of the upper end attachment device, it is preferable that the upper end attachment device adsorbs the upper protective tape on the absorption surface of the upper main attachment device at a position higher than the adsorption surface of the upper main attachment device. Therefore, interference between the upper protective tape and the upper end attachment device, and the like may be excluded upon adsorption of the upper protective tape. Then, it is preferable that after the attachment of the upper protective tape through the upper main attachment device is completed, the upper end attachment device moves to a position lower than the adsorption surface of the upper main attachment device to bond both ends of the upper protective tape. Through this, by minimizing the elevating distance of the upper end attachment device, a short process speed effect by a simple structure can be expected.

To implement the above-described objects, according to one example of the present invention, it is possible to provide an upper end attachment device and the lower end attachment device separately provided from the upper main attachment and the lower main attachment device attaching the upper protective tape and the lower protective tape to the upper and lower sides of the electrode tab respectively.

The upper end attachment device may be provided to pressurize the both ends of the upper protective tape by descending, and the lower end attachment device may be provided to pressurize the both ends of the lower protective tape by ascending. The upper end attachment device and the lower end attachment device may be provided to be symmetrical up and down, and may be provided to move in opposite directions.

### Advantageous Effects

Through one example of the present invention, it is possible to provide a protective tape attachment device comprising an upper end attachment device and a lower end attachment device, capable of attaching both ends of each of an upper protective tape and a lower protective tape to each other, and a battery cell manufacturing method using the same.

Through one example of the present invention, it is possible to provide a protective tape attachment device comprising an upper end attachment device and a lower end attachment device which are respectively easily added to an upper main attachment and a lower main attachment device attaching an upper protective tape and a lower protective tape to an electrode tab, and thus capable of bonding both ends of each of the upper protective tape and the lower protective tape to each other, and a battery cell manufacturing method using the same.

Through one example of the present invention, it is possible to provide a protective tape attachment device which comprises an upper end attachment device and a lower end attachment device independently raising and lowering with respect to an upper main attachment and a lower main attachment device respectively, and thus can effectively prevent the upper end attachment device and the lower end attachment device from being interference during a process of attaching an upper protective tape and a lower protective tape to the upper main attachment and the lower main attachment device respectively, and a battery cell manufacturing method using the same.

Through one example of the present invention, it is possible to provide a protective tape attachment device capable of preventing damage to an upper protective tape and a lower protective tape during a process of pressurizing and bonding both ends of each of the upper protective tape and the lower protective tape and increasing the bonding length of both ends, and a battery cell manufacturing method using the same.

### Description of Drawings

Figure 1 is an exploded perspective diagram showing components of a pouch-type secondary battery of a conventional art.
Figure 2 is a side view showing internal components of a pouch-type secondary battery of a conventional art.
Figure 3 is a partial plan view showing a part of a pouch-type electrode assembly of a conventional art.
Figure 4 is a partial plan view showing a part of a pouch-type electrode assembly of a conventional art.
Figure 5 is a front view schematically showing a taping appearance using a tape attachment device of a conventional art for attaching a protective tape.
Figure 6 is a conceptual diagram showing components of a protective tape attachment device according to one example of the present invention.
Figure 7 is a front view schematically showing an appearance of a protective tape attachment device according to one example of the present invention.
Figure 8 is a side view schematically showing some components of a protective tape attachment device according to one example of the present invention.
Figures 9 and 10 are front views schematically showing operation appearances of a protective tape attachment device according to one example of the present invention.
Figure 11 is a partially enlarged view enlarging a part of the protective tape attachment device of Figure 9.
Figures 12 and 13 are front views schematically showing operation appearances of a protective tape attachment device according to another example of the present invention.
Figure 14 is a flow chart of a battery cell manufacturing method according to one example of the present invention.

### Mode for Invention

Hereinafter, a pouch forming device according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

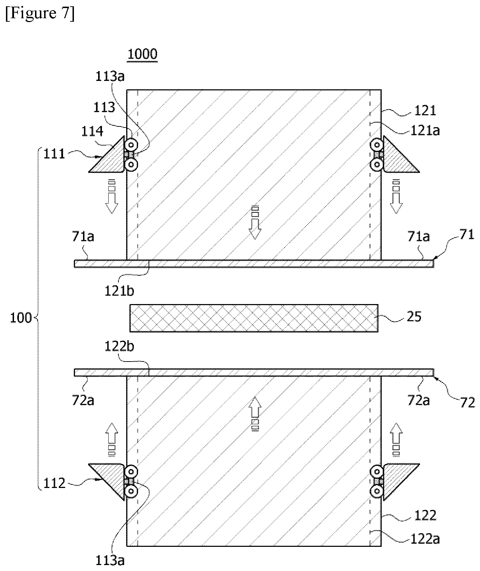

Figure 6 is a conceptual diagram showing components of a protective tape attachment device (1000) according to one example of the present invention. Figure 7 is a front view schematically showing an appearance of a protective tape attachment device (1000) according to one example of the present invention.

Referring to Figures 6 and 7, the protective tape attachment device (1000) according to one example of the present invention may be provided so that an upper protective tape and a lower protective tape are attached to the upper surface and the lower surface of an electrode tab (25) provided in an electrode assembly (50), respectively, and furthermore both ends of th e upper protective tape (71) and the lower protective tape (72) are attached to each other.

The portion of the electrode tab (25) covered by the upper protective tape (71) and th e lower protective tape (72) may be a portion welded to an electrode lead.

Specifically, the protective tape attachment device (1000) may comprise an upper main attachment device (121). The upper main attachment device (121) may be provided so that the upper protective tape (71) is pressurized to the upper surface of a portion of the electrode tab (25) provided in the electrode assembly (50) to be attached. The upper main attachment device (121) may be provided so that a lower part of the upper main attachment device (121) directly pressurizes the upper surface of the upper protective tape (71). The upper main attachment device (121) may be moved up and down by a separate first linear drive part (131). For example, the first linear drive part (131) may comprise a linear motor or a servo motor to linearly move the upper main attachment device (121) up and down.

The upper main attachment device (121) may pressurize the upper protective tape (71) attached to the electrode tab (25) to strengthen the attachment force. In addition, the upper main attachment device (121) may attach the upper protective tape to the electrode tab (25) by pressurizing the upper protective tape (71) to the electrode tab (25) in a state where the upper protective tape (71) is adsorbed.

In addition, the protective tape attachment device (1000) according to one example of the present invention may comprise a lower main attachment device (122). The lower main attachment device (122) may be provided so that the lower protective tape (72) is pressurized to the lower surface of a portion of the electrode tab (25) provided in the electrode assembly (50) to be attached. The lower main attachment device (122) may be provided so that the upper part directly pressurizes the lower surface of the lower protective tape (72). The lower main attachment device (122) may be moved up and down by a separate second linear drive part (132). For example, the second linear drive part (132) may comprise a linear motor or a servo motor to allow the lower main attachment device (122) to be linearly raised and lowered.

One side of the upper protective tape (71) and the lower protective tape (72) may be in a state where an adhesive is imparted, and the other side may be in a state where no adhesive is imparted. That is, one side (adhesive surface) facing the electrode tab (25) may be in a state where an adhesive is imparted, and the other side (non-adhesive surface) facing the u pper main attachment device (121) and the lower main attachment device (122) may be in a state where no adhesive is imparted.

The upper main attachment device (121) and the lower main attachment device (122) may adsorb and fix the non-adhesive surface of the upper protective tape and the lower protective tape to which no adhesive is imparted, and may be adsorption-released after the bonding completion. This adsorption may be performed using vacuum. Therefore, on the upp er main attachment device (121) and the lower main attachment device (122), adsorption surfaces (121b, 122b) adsorbing the upper protective tape and the lower protective tape is formed respectively. The adsorption surfaces (121b, 122b) may be provided to be parallel to the electrode tab surface.

Meanwhile, the upper main attachment device (121) and the lower main attachment device (122) may be formed to be symmetrical up and down, and it is preferable that they operate simultaneously to attach the upper protective tape (71) and the lower protective tape (72), as described below. In addition, the upper main attachment device (121) and the lower main attachment device (122) may be provided to operate in opposite directions.

It is preferable that the protective tape attachment device (1000) according to one example of the present invention comprises an upper end attachment device (111). The upper end attachment device (111) may be provided on both sides of the upper main attachment device (121).

In addition, it is preferable that the protective tape attachment device (1000) according to one example of the present invention comprises a lower end attachment device (112). The lower end attachment device (112) may be provided on both sides of the lower main attachment device (122).

Figure 7 illustrates a state where the upper protective tape and the lower protective tape (71, 72) is absorbed on the adsorption surface (121b, 122b) of the upper main attachment device and the lower main attachment device (121, 122). That is, it illustrates a state of preparation for attaching the upper protective tape and the lower protective tape to the electrode tab.

First, to absorb the upper protective tape (71) and the lower protective tape (72) on the adsorption surface (121b, 122b), a process of pulling the upper protective tape and th e lower protective tape from the roll of the upper protective tape and the lower protective tape, positioning it at the bottom of the upper main attachment device and lower main attachment device, and then cutting it to an appropriate length may be performed. In this instance, both ends (71a, 72a) separated from both sides of the adsorption surface are formed. Therefore, interference by the upper end attachment device (111) and the lower end attachment device (122) may occur in the process of adsorbing the upper protective tape and the lower protective tape on the upper main attachment device and lower main attachment device respectively. Therefore, as illustrated, in the process of preparation for attaching the upper protective tape and the lower protective tape to the electrode tab, it is preferable that the upper end attachment device (111) and the lower end attachment device (122) are positioned to be spaced apart from the adsorption surface (121b, 122b).

As illustrated, the upper end attachment device (111) is provided on the upper main attachment device (121), whereby it may be provided to be raised and lowered integrally with the upper main attachment device (121). In addition, it is preferable that the upper end attachment device (111) is provided to be raised and lowered independently of the raising and lowering of the upper main attachment device (121). Such a feature may be applied equally to the lower end attachment device (112) and the lower main attachment device (122).

First, the upper main attachment device (121) and the lower main attachment device (122) may approach the electrode tab (25) to attach the upper protective tape and the lower protective tape to the electrode tab (25). This state is a state where both ends of the upper protective tape and the lower protective tape are not attached to each other. Thereafter, in a state where the upper main attachment device and the lower main attachment device are stopped, the upper end attachment device and the lower end attachment device further approach the electrode tab (25) to pressurize the upper protective tape and the lower protective tape in both directions. Through this, both ends of the upper protective tape may be bonded to both ends of the lower protective tape.

Therefore, the protective tape attachment device (1000) according to one example of the present invention comprises an upper end attachment device (111) and a lower end attachment device (112) together with an upper main attachment device (121) and a lower main attachment device (122), so that after attachment of the upper protective tape (71) and the lower protective tape (72) to the upper and lower surfaces of the electrode tabs (25), both ends (71a) of the upper protective tape (71) and both ends (72a) of the lower protective tape (72) may be bonded to each other.

Accordingly, the protective tape attachment device (1000) according to one example of the present invention can solve the problem that both ends (71a) of the upper protective tape (71) and both ends (72a) of the lower protective tape (72) in the conventional art do not completely contact each other and thus are not attached to each other, or are easily separated from each other by external impact. Furthermore, it can solve the problem that in both ends (71a, 72a) of the unattached upper protective tape (71) and the lower protective tape (72), the bonded portion is detached from the electrode tab (25) by external pressure or electrolyte flow, or that the non-bonded portion is folded. Particularly, when the ends of the upper protec tive tape (71) and the lower protective tape (72) are folded toward the sealing region of the pouch, it is possible to prevent that both ends (71a, 72a) of the upper protective tape (71) an d the lower protective tape (72) are interposed between the pouch films during the sealing process of the pouch to hinder heat fusion, whereby an unsealed region occurs.

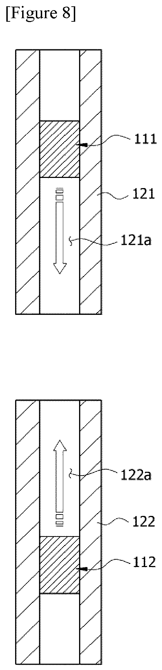

Figure 8 is a side view schematically showing an appearance of some components of a protective tape attachment device (1000) according to one example of the present invention.

The upper end attachment device (111) of the protective tape attachment device (1000) according to one example of the present invention may each be provided to be independently raised and lowered with respect to the upper main attachment device (121). The protective tape attachment device (1000) may further comprise a third linear drive part (133) moving the upper end attachment device (111) up and down. For example, the third linear drive part (133) may be provided with a linear motor. Also, in the upper main attachment device (121), an upper rail part (121a) setting a route that the upper end attachment device (111) moves up and down may be formed on the side portion. The upper rail part (121a) may be formed such that a portion thereof is embedded lengthwise in the up and down direction on the side portion of the upper main attachment device (121). The upper rail part (121a) may have an embedded space into which a portion of the upper main attachment device (121) may be inserted. That is, the upper end attachment device (111) may move up and down along the upper rail part (121a).

Also, in the protective tape attachment device (1000) according to one example of the present invention, the lower end attachment device (112) may each be provided to be independently raised and lowered with respect to the lower main attachment device (122). The protective tape attachment device (1000) may further comprise a fourth linear drive part (134) moving the lower end attachment device (112) up and down. For example, the fourth linear drive part (134) may be provided with a linear motor. In addition, in the lower main attachment device (122), a lower rail part (122a) setting a route that the lower end attachment device (112) moves up and down may be formed on the side portion. The lower rail part (122a) may be formed such that a portion thereof is embedded lengthwise in the up and down direction on the side portion of the lower main attachment device (122). The lower rail part (122a) may have an embedded space into which a portion of the lower main attachment device (122) may be inserted. That is, the lower end attachment device (112) may move up and down along the lower rail part (122a).

In addition, the protective tape attachment device (1000) may further comprise a control part (140). The control part (140) may control the operation of each of the first linear drive part (131), the second linear drive part (132), the third linear drive part (133), and the fourth linear drive part (134).

Referring to Figures 7, 9, and 10, the operation appearance of the protective tape attachment device (1000) according to one example of the present invention will be described in detail.

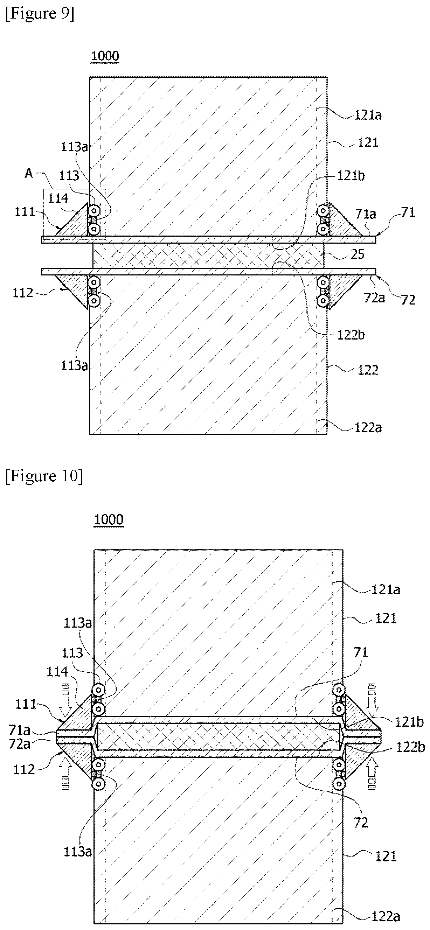

As illustrated in Figure 7, in a state where attachment of the protective tape is prepared, each of the upper end attachment device and the lower main attachment device moves to the protective tape attachment position. That is, the appearance of each of the upper protective tape and lower protective tape being attached to the electrode tab is illustrated in Figure 9. Thereafter, the upper end attachment device (111) and the lower end attachment device (112) may be additionally driven to bond both ends of each of the upper protective tape and lower protective tape.

As shown in Figure 10, after the upper main attachment device (121) pressurizes the upper protective tape (71), the upper end attachment device (111) may move further downward than the upper main attachment device (121) by the third linear drive part (133). In this instance, while the upper end attachment device (111) moves further downward than the upper main attachment device (121), it pressurizes the upper surface of the upper protective tape (71) downward.

In addition, after the lower main attachment device (122) pressurizes the lower protective tape (72), the lower end attachment device (112) may move further upward than the lower main attachment device (122) by the fourth linear drive part (134). In this instance, while the lower end attachment device (112) moves further upward than the lower main attachment device (122), it pressurizes the lower surface of the lower protective tape (72) upward.

Therefore, the protective tape attachment device (1000) according to one example of the present invention may completely bond both ends (71a) of the upper protective tape (71) and both ends (72a) of the lower protective tape (72) to each other using the upper end attachment device (111) and the lower end attachment device (112) after the attachment process of the upper protective tape (71) and the lower protective tape (72) of the upper main attachment device (121) and the lower main attachment device (122) is completed. Accordingly, it is possible to prevent the upper protective tape (71) and the lower protective tape (72) attached to the electrode tab (25) from being detached, and it is possible to prevent the problem that the upper protective tape (71) and the lower protective tape (72) are bonded to other components to cause defects, or are interposed in the sealing region to interfere with the sealing process.

Meanwhile, the upper end attachment device (111) and the lower end attachment device (112) according to one example of the present invention may comprise a pressurizing block (114) provided to pressurize the end of the upper protective tape (71) or the lower protective tape (72). For example, the pressurizing block (114) may be formed with a triangular cross-section.

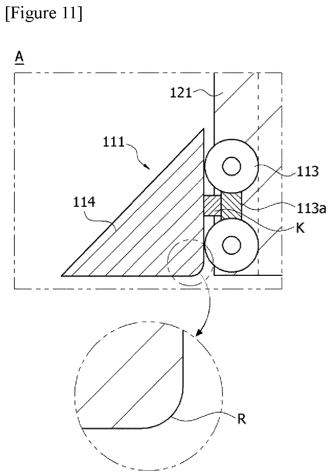

Figure 11 is a partially enlarged view enlarging a part of the protective tape attachment device (1000) of Figure 9.

The pressurizing block (114) may have a rounded edge (R) contacting the upper protective tape (71) or the lower protective tape (72). For example, as in Figure 11, in the pressurizing block (114) of the upper end attachment device (111), a lower edge (R) contacting the upper protective tape (71) may have a rounded shape. Likewise, for example, in the pressurizing block (114) of the lower end attachment device (112), an upper edge (R) contacting the lower protective tape (72) may have a round shape.

The edge (R) may be provided to be bent more stably at a position where each of the upper protective tape and the lower protective tape leaves the electrode tab. Particularly, it may be provided so that bonding is performed up and down from the initial position where each of the upper protective tape and the lower protective tape leaves the electrode tab.

Therefore, the pressurizing block (114) comprises a round edge (R), whereby it is possible to effectively prevent damage to the upper protective tape (71) and the lower protective tape (72) which may occur when the surfaces of the upper protective tape (71) an d the lower protective tape (72) are pressurized using the pressurizing blocks (114) of the upper end attachment device (111) and the lower end attachment device (112), and it becomes possible to further increase the bonding area.

Also, the upper end attachment device (111) and the lower end attachment device (112) may comprise a moving member (113) moving the pressurizing block (114) in the up-and-down direction. For example, as in Figure 7, the moving member (113) may move up and down in a state where the pressurizing block (114) is mounted thereon. That is, the moving member (113) may have a movable structure along the rail part of Figure 8.

In addition, the moving member (113) may be provided with a plurality of wheels. The plurality of wheels may be configured to be movable in a state where the pressurizing block (114) is mounted thereon. The plurality of wheels may be provided to be movable in the up-and-down direction along the rail part (121a) of the upper main attachment device (121) or the rail part (122a) formed on one side of the lower main attachment device (122).

Furthermore, the moving member (113) may have a wheel connecting part (113a) connecting the plurality of wheels to each other. The pressurizing block (114) may be mounted on the lateral surface of the wheel connecting part (113a). For example, the wheel connecting part (113a) may be connected to the third linear driving portion (133). That is, the wheel connecting part (113a) may be moved up and down according to the movement of the drive shaft of the third linear driving portion (133). At this time, the pressurizing block (114) may be mounted to be movable up and down from the lateral surface of the wheel connecting part (113a) to a predetermined distance. That is, the pressurizing block (114) may have a connecting structure (K) movably connected on the wheel connecting part (113a). For example, a linear groove (not shown), in which the pressurizing block (114) is movable up and down in a state where a part thereof is inserted thereto, may be formed on the wheel connecting part (113a). The wheel connecting part (113a) may be rotatably connected to the plurality of wheels.

Also, the pressurizing block (114) of the upper end attachment device (111) may move downward further on the moving member (113) by the third linear drive part (133) when the downward movement of the moving member (113) is completed. At this time, the pressurizing block (114) may be pressurized downward by the third linear drive part (133), and the pressurizing block (114) may be lowered along the linear groove (not shown) of the moving member (113) to pressurize the surface of the upper protective tape (71). At this time, a spring member (not shown) may be embedded in the linear groove so that the pressurizing block (114) may be positioned at a normal position on the moving member (113) while it is not pressurized by the third linear drive part (133). That is, the spring member may be provided to elastically pressurize the pressurizing block (114) in the direction opposite to the pressurizing direction of the third linear drive part (133).

In addition, the pressurizing block (114) of the lower end attachment device (112) may move upward further on the moving member (113) by the fourth linear drive part (134) when the upward movement of the moving member (113) is completed. At this time, the pressurizing block (114) may be pressurized upward by the fourth linear drive part (134), and the pressurizing block (114) may be lowered along the linear groove of the moving member (113) to pressurize the surface of the upper protective tape (71). At this time, a spring member (not visible) may be embedded in the linear groove so that the pressurizing block (114) may be positioned at a normal position on the moving member (113) while it is not pressurized by the fourth linear drive part (134). That is, the spring member may be provided to elastically pressurize the pressurizing block (114) in the direction opposite to the pressurizing direction of the fourth linear drive part (134).

Therefore, when the downward movement or upward movement of the moving member (113) is completed, the pressurizing block (114) is provided to move downward or upward further on the moving member (113), whereby the pressurizing blocks (114) may pressurize both ends (71a) of the upper protective tape (71) and both ends (72a) of the lower protective tape (72), so that it is possible to bond the upper protective tape and the lower pr otective tape without damage.

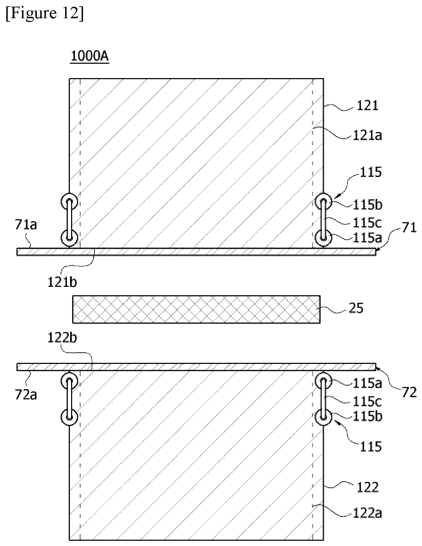

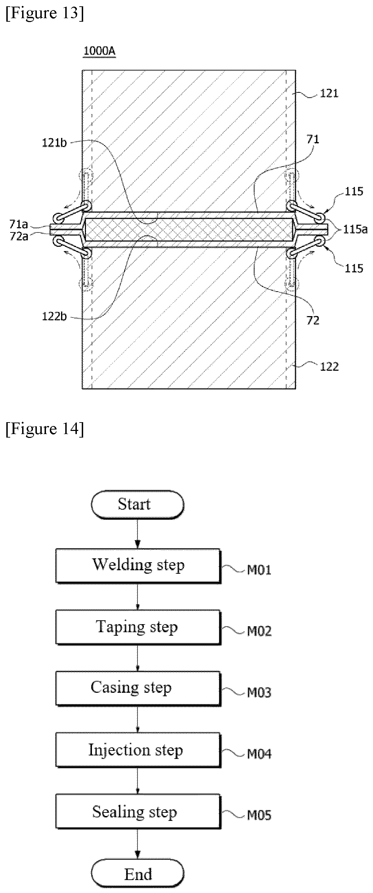

Figures 12 and 13 are front views schematically showing operation appearances of a protective tape attachment device (1000) according to another example of the present invention.

Referring to Figures 12 and 13, a protective tape attachment device (1000) according to another example of the present invention may comprise a roller member (115) provided with a plurality of pressurizing roll (115a) and moving rolls (115b) as the upper end attachment device and the lower end attachment devices instead of the pressurizing block (114) and the plurality of wheels in the protective tape attachment device (1000) of Figure 7. The remaining constitutions may be the same as or like those of the protective tape attachment device (1000) of Figure 7.

Specifically, the roller member (115) may be provided to pressurize both ends (71a, 72a) of the upper protective tape (71) or the lower protective tape (72). For example, among the plurality of pressurizing roll (115a) and moving rolls (115b) of the roller member (115), one may be a pressurizing roll (115a) and the other may be a moving roll (115b). That is, as in Figure 13, the pressurizing roll (115a) of the roller member (115) of the upper end attachment device (111) may be provided to pressurize the upper surface of the upper protective tape (71). The pressurizing roll (115a) of the roller member (115) of the lower end attachment device (112) may be provided to pressurize the lower surface of the lower protective tape (72). The moving roll (115b) may be provided to be movable up and down along one side of the upper main attachment device (121) or the lower main attachment device (122).

In addition, the plurality of pressurizing roll (115a) and moving rolls (115b) of the roller member (115) may be provided to be movable up and down along one side of the upper main attachment device (121) or the lower main attachment device (122). That is, the plurality of pressurizing roll (115a) and moving rolls (115b) may be provided to be movable along the rail part (121a) of the upper main attachment device (121) or the rail part (122a) of the lower main attachment device (122) as shown in Figure 8.

The roller member (115) may be provided with a roll connecting part (115c) connecting the plurality of pressurizing roll (115a) and moving rolls (115b). For example, as in Figure 12, the roller member (115) may be provided with a roll connecting part (115c) connecting the pressurizing roll (115a) and the moving roll (115b). For example, the roll connecting part (115c) may be connected to the third linear drive part (133). That is, the roll connecting part (115c) may be moved up and down according to the movement of the drive shaft of the third linear drive part (133). The roll connecting part (115c) may be rotatably connected to the plurality of pressurizing roll (115a) and moving rolls (115b).

The plurality of rolls (115a, 115b) may be provided to pressurize the surface of both ends (71a) of the upper protective tape (71) or both ends (71a) of the lower protective tape (72) while moving from the inner side of the upper protective tape (71) or the lower protective tape (72), to which the electrode tab (25) is bonded, to the outside terminal. For example, as in Figure 13, among the plurality of pressurizing roll (115a) and moving rolls (115b) of the upper end attachment device (111), the pressurizing roll (115a) may be provided to pressurize the surface of the upper protective tape (71) or the lower protective tape (72) while moving from the inner side of the upper protective tape (71), to which the electrode tab (25) is bonded, to the outside terminal.

For example, the moving roll (115b) may be provided to move up and down. The pressurizing roll (115a) located on the upper main attachment device (121) and the pressurizing roll (115a) located on the lower main attachment device (122) move in a lateral direction to pressurize the upper protective tape (71) and the lower protective tape (72), whereby both ends (71a) of the upper protective tape (71) and both ends (72a) of the lower protective tape (72) may be bonded to each other.

Meanwhile, in the above-described examples, the upper end attachment device (111), the lower end attachment device (112) and the roll member (115) have been described as provided on the upper main attachment device (121) and the lower main attachment device (122). Alternatively, the upper end attachment device (111) and the lower end attachment device (112) and the roll member (115) may be provided independently of the upper main attachment device (121) and the lower main attachment devices (122). That is, they are provided on both sides of the upper main attachment device (121) and the lower main attachment device (122), whereby they may be provided to move independently of the movement of the main attachment device.

Figure 14 is a flow chart of a battery cell manufacturing method according to one example of the present invention.

Specifically, in the battery cell manufacturing method according to one example of the present invention, a welding step (M01) is a step of welding an electrode tab (25) and an electrode lead (51) to an electrode assembly (50). At this time, a rough-surfaced welding porti on (25a, see Figure 3) may be generated on the electrode tab (25) by resistance welding, ultrasonic welding, or laser welding. The welding step may be performed after a process of guiding electrode tabs and a process of pre-welding the guided electrode tabs.

In addition, the battery cell manufacturing method according to one example of the present invention comprises a taping step (M02). The taping step (M02) may be a step of attaching an upper protective tape (71) and a lower protective tape (72) to the electrode tab (25). That is, in the taping step (M02), the upper protective tape (71) and the lower protective tape (72) may be attached to the welded portion (25a) formed on the electrode tab (25) so that the welded portion (25a) does not damage other components (e.g., pouch film).

Furthermore, in the taping step (M02), both ends of the upper protective tape (71) may allow to be bonded to both ends of the lower protective tape (72) with each other.

The battery cell manufacturing method according to one example of the present invention comprises a casing step (M03). The casing step (M03) may be a step of heat-fusing a pouch, in which the electrode assembly (50) having an upper protective tape (71) and a lower protective tape (72) attached is accommodated, to form a pouch case (21, see Figure 1). At this time, one side facing the electrode tab (25) of the pouch case (21) of a battery cell may be heat-fused. That is, the casing step (M03) may comprise a partially sealing step of sealing the left, right, and lower sides of the pouch case (21) except for the upper side into which the electrolyte of the pouch is injected.

The battery cell manufacturing method according to one example of the present invention comprises an injection step (M04). The injection step (M04) is a step of injecting an electrolyte into the inside of the pouch case. For example, the injection step (M04) may inject an electrolyte through the upper side of the unsealed pouch case (21).

The battery cell manufacturing method according to one example of the present invention comprises a sealing step (M05). The sealing step (M05) is a step of sealing the pouch case (21). The sealing step (M05) is a step of heat-fusing the upper side of the pouch case (21) so that external substances do not enter the inside of the pouch case (21).

In the taping step (M02), the upper protective tape (71) and the lower protective tape (72) may each be attached to the upper surface and the lower surface of the electrode tab (25), respectively, by pressurization of the upper main attachment device (121) and the lower main attachment device (122).

Both ends (71a, 72a) of each of the upper protective tape (71) and the lower protective tape (72) extending outward on both sides of the electrode tab (25) are attached to each other by pressurization of the upper end attachment device (111) and the lower end attachment device (112) independently of the pressurization of the upper main attachment device (121) and the lower main attachment device (122).

Therefore, in the battery cell manufacturing method according to one example of the present invention, both ends (71a) of the upper protective tape (71) and both ends (71b) of the lower protective tape (72) extending outward on both sides of the electrode tab (25) are attached to each other by the pressurization of the upper end attachment device (111) and the lower end attachment device (112) independently of the pressurization of the upper main attachment device (121) and the lower main attachment device (122), whereby it is possible to solve the problem that the both ends (71a) of the upper protective tape (71) and the both ends (72a) of the lower protective tape (72) do not completely contact each other, and thus are not attached to each other, or are easily separated from each other by external impact.

### Industrial Applicability

It is described in the Detailed Description of Invention.

## Claims

1. A protective tape attachment device, **characterized in that** the protective tape attachment device comprises:
an upper main attachment device for attaching an upper protective tape to an upper surface of an electrode tab provided in an electrode assembly;
a lower main attachment device for attaching a lower protective tape to a lower surface of the electrode tab;
an upper end attachment device provided on both sides of the upper main attachment device and pressurizing both ends of the upper protective tape extending outward from the both sides of the upper main attachment device; and
a lower end attachment device provided on both sides of the lower main attachment device and pressurizing both ends of the lower protective tape extending outward from the both sides of the lower main attachment device, and
the upper end attachment device and the lower end attachment device are provided to simultaneously pressurize the both ends of the upper protective tape and the both ends of the lower protective tape, respectively, so that the both ends of the upper protective tape and the both ends of the lower protective tape are bonded to each other.

2. The protective tape attachment device according to claim 1,
**characterized in that** the upper end attachment device is moved downward from the upper main attachment device after pressurization of the upper main attachment device, and the lower end attachment device is moved upward from the lower main attachment device after pressurization of the lower main attachment device.

3. The protective tape attachment device according to claim 2,
**characterized in that** the upper end attachment device and the lower end attachment device are provided to be raised and lowered integrally with the upper main attachment device and the lower main attachment device, respectively.

4. The protective tape attachment device according to claim 3,
**characterized in that** the upper end attachment device and the lower end attachment device are provided to be raised and lowered independently with respect to the upper main attachment device and the lower main attachment device, respectively.

5. The protective tape attachment device according to claim 4,
**characterized in that** the upper end attachment device has an adsorption surface to which the upper protective tape is adsorbed, and the lower end attachment device has an adsorption surface to which the lower protective tape is adsorbed.

6. The protective tape attachment device according to claim 5,
**characterized in that** the adsorption surface adsorbs a non-adhesive surface of the upper protective tape or the lower protective tape in a way that an adhesive surface of the upper protective tape or the lower protective tape faces the electrode tab.

7. The protective tape attachment device according to claim 6,
**characterized in that** after the upper protective tape is adsorbed to the adsorption surface of the upper main attachment device in a state where the upper end attachment device is positioned above the adsorption surface of the upper main attachment, attachment of the upper protective tape is performed, and
after the lower protective tape is adsorbed to the adsorption surface of the lower main attachment device in a state where the lower end attachment device is positioned below the adsorption surface of the lower main attachment device, attachment of the lower protective tape is performed.

8. The protective tape attachment device according to any one of claims 1 to 7,
**characterized in that** the upper end attachment device and the lower end attachment device each comprise:
a pressurizing block provided to pressurize an end of the upper protective tape or the lower protective tape; and
a moving member moving the pressurizing block in an up-and-down direction.

9. The protective tape attachment device according to claim 7,
**characterized in that** the pressurizing block has
a rounded edge contacting an extension start portion of the both ends of the upper protective tape or the lower protective tape.

10. The protective tape attachment device according to claim 8,
**characterized in that** the moving member comprises a wheel guiding a movement of the pressurizing block with respect to the upper main attachment device or the lower main attachment device.

11. The protective tape attachment device according to any one of claims 1 to 7,
**characterized in that** the upper end attachment device and the lower end attachment device comprise
a roller member having a plurality of rolls provided to be movable up and down along one side of the upper main attachment device or the lower main attachment device, to pressurize one side of the upper protective tape or the lower protective tape.

12. The protective tape attachment device according to claim 11,
**characterized in that** the roller member is provided to pressurize the upper protective tape or the lower protective tape while moving from an inner side of the upper protective tape or the lower protective tape, to which the electrode tab is bonded, to an outside terminal.

13. The protective tape attachment device according to claim 11,
**characterized in that** the plurality of rolls comprises:
a moving roll provided to be movable up and down along one side of the upper main attachment device or the lower main attachment device; and
a pressurizing roll provided to pressurize the upper surface of the upper protective tape or the lower surface of the lower protective tape.

14. The protective tape attachment device according to claim 13,
**characterized in that** the roller member comprises a transmission member transmitting a vertical direction movement of the moving roll to a vertical direction movement and a horizontal direction movement of the pressurizing roll.

15. A battery cell manufacturing method, **characterized in that** the method comprises:
a welding step of welding an electrode tab and an electrode lead to an electrode assembly;
a taping step of attaching an upper protective tape and a lower protective tape to the electrode tab;
a casing step of heat-fusing a pouch, in which the electrode assembly having the upper protective tape and the lower protective tape attached is accommodated, to form a pouch case;
an injection step of injecting an electrolyte into the pouch case; and
a sealing step of sealing the pouch case, and
in the taping step,
the upper protective tape and the lower protective tape are attached to an upper surface and a lower surface of the electrode tab, respectively, by pressurization of an upper main attachment device and a lower main attachment device, and then
both ends of the upper protective tape and both ends of the lower protective tape, which extend outward from both sides of the electrode tab, are attached to each other up and down by pressurization of an upper end attachment device and a lower end attachment device independently of the pressurization of the upper main attachment device and the lower main attachment device.

16. The battery cell manufacturing method according to claim 15,
**characterized in that** the upper main attachment device and the upper end attachment device are provided to be symmetrical with the lower main attachment device and the lower end attachment device with respect to the electrode tab, and move in the opposite direction to a movement direction of the lower main attachment device and the lower end attachment device for attachment of the upper protective tape and the lower protective tape and attachment of the both ends.

17. The battery cell manufacturing method according to claim 16,
**characterized in that** the upper end attachment device is moved downward from the upper main attachment device after pressurization of the upper main attachment device, and
the lower end attachment device is moved upward than the lower main attachment device after pressurization of the lower main attachment device.

18. The battery cell manufacturing method according to claim 17,
**characterized in that** the pressurization by the upper end attachment device and the lower end attachment device is performed in a state where the pressurization of the upper main attachment device and the lower main attachment device is maintained.

19. The battery cell manufacturing method according to claim 16,
**characterized in that** the upper end attachment device and the lower end attachment device comprise a pressurizing block pressurizing the both ends of the upper protective tape or the lower protective tape by raising and lowering.

20. The battery cell manufacturing method according to claim 16,
**characterized in that** the upper end attachment device and the lower end attachment device comprise a pressurizing roll pressurizing the both ends of the upper protective tape or the lower protective tape by raising and lowering, and rolling.
